# FASCICULE DE BREVET EUROPEEN

(11) **EP 0 965 224 B1**
(45) Date de publication et mention de la délivrance du brevet: **04.08.2004**
(21) Numéro de dépôt: 98913850.8
(22) Date de dépôt: 06.03.1998
(51) Int. Cl.: H04N 3/15

(54) **PROCEDE DE COMMANDE D'UN DISPOSITIF PHOTOSENSIBLE A FAIBLE REMANENCE, ET DISPOSITIF PHOTOSENSIBLE METTANT EN OEUVRE LE PROCEDE**
VERFAHREN ZUR STEUERUNG EINER LICHTEMPFINDLICHEN VORRICHTUNG MIT SCHWACHER REMANENZ UND LICHTEMPFINDLICHE VORRICHTUNG ZUR DURCHFÜHRUNG DES VERFAHRENS
METHOD FOR CONTROLLING A PHOTOSENSITIVE DEVICE WITH LOW IMAGE RETENTION, AND PHOTOSENSITIVE DEVICE IMPLEMENTING SAME

(30) Priorité: 07.03.1997 FR 9702752
(43) Date de publication de la demande: 22.12.1999
(73) Titulaire: THALES ELECTRON DEVICES S.A., 78140 Vélizy (FR)
(72) Inventeur: DUCOURANT, Thierry, Thomson-CSF S.C.P.I., F-94117 Arcueil Cedex (FR); CHAUSSAT, Christophe, Thomson-CSF S.C.P.I., F-94117 Arcueil Cedex (FR)
(74) Mandataire: Guérin, Michel
(86) Numéro de dépôt international: PCT/FR1998/000450
(87) Numéro de publication internationale: WO 1998/041010

(56) Documents cités:
- EP-A- 0 364 314
- EP-A- 0 364 351
- FR-A- 2 605 166
- US-A- 4 758 894

## Description

La présente invention concerne un procédé de commande de dispositifs photosensibles ayant une matrice de points photosensibles du type notamment réalisés par des techniques de dépôt de matériaux semiconducteurs, et elle a pour but de réduire voire de supprimer, un effet de rémanence produit au niveau des points photosensibles. L'invention concerne plus particulièrement (mais non exclusivement) la commande de tels dispositifs utilisés à la détection d'images radiologiques. Elle concerne aussi un dispositif photosensible permettant la mise en oeuvre de ce procédé.

Les techniques de dépôts en films minces de matériaux semiconducteurs tels que le silicium amorphe hydrogéné (aSiH), sur des supports isolants en verre par exemple, permettent de réaliser des matrices de points photosensibles pouvant produire une image à partir d'un rayonnement visible ou proche du visible. Pour utiliser ces matrices à la détection d'images radiologique, il suffit d'interposer entre le rayonnement X et la matrice, un écran scintillateur pour convertir le rayonnement X en rayonnement lumineux dans la bande de longueurs d'onde auxquelles les points photosensibles sont sensibles.

Les points photosensibles qui forment ces matrices comprennent généralement un élément photosensible associé à un élément remplissant une fonction d'interrupteur.

L'élément photosensible est couramment constitué par une diode, montée en série avec l'élément interrupteur. L'élément interrupteur peut être par exemple une diode dite de commutation dont l'état " fermé " ou " passant " correspond à la polarisation qui la met en conduction directe, et dont l'état " ouvert " ou " bloqué " correspond à sa polarisation en inverse. Les deux diodes sont montées avec des sens de conduction opposés, dans une configuration dite " tête-bêche ". Une telle disposition est bien connue, notamment par la demande de brevet français 86 14058 (n° de publication 2 605 166) dans laquelle sont décrits, une matrice de points photosensibles du type à deux diodes en configuration " tête- bêche ", un procédé de lecture des points photosensibles, et une manière de réaliser un tel dispositif photosensible.

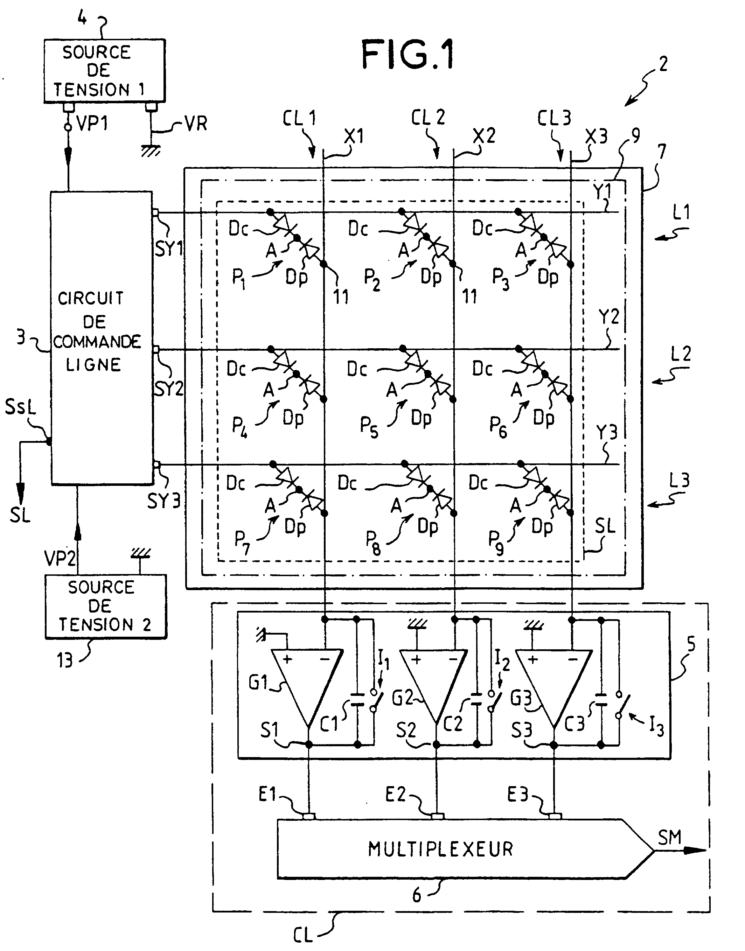

La figure 1 représente un schéma simplifié d'un dispositif photosensible 1, comportant une matrice 2 organisée de façon classique. La matrice 2 comporte des points photosensibles P1 à P9, formés chacun par une diode photosensible Dp et une diode de commutation Dc montées en série suivant une configuration tête-bêche. La matrice comporte des conducteurs en ligne Y1 à Y3 croisés avec des conducteurs en colonne X1 à X3, avec à chaque croisement, un point photosensible connecté entre un conducteur ligne et un conducteur colonne. Les points photosensibles P1 à P9 sont ainsi disposés suivant des lignes L1 à L3 et des colonnes CL1 à CL3.

Dans l'exemple de la figure 1, seulement 3 lignes et 3 colonnes sont représentées qui définissent 9 points photosensibles, mais une telle matrice peut avoir une capacité beaucoup plus grande, pouvant aller jusqu'à plusieurs millions de points. Il est courant par exemple de réaliser de telles matrices ayant des points photosensibles disposés suivant 2000 lignes et 2000 colonnes (dans une surface de l'ordre de 40 cm x 40 cm), ou bien disposés suivant une unique ligne et plusieurs colonnes pour constituer une barrette de détection, ou encore disposés suivant une unique ligne et une unique colonne pour constituer un unique point photosensible.

Le dispositif photosensible comporte un circuit de commande ligne 3, dont des sorties SY1, SY2, SY3 sont reliées respectivement aux conducteurs ligne Y1, Y2, Y3. Le circuit de commande ligne 3 dispose de différents éléments (non représentés), tels que par exemple, circuit d'horloge, circuits de commutation, registre à décalage, qui lui permettent de réaliser un adressage séquentiel des conducteurs ligne Y1 à Y3. Le dispositif photosensible comporte en outre une source de tension 4, délivrant au circuit de commande ligne 3 une tension VP servant à définir l'amplitude d'impulsions appliquées aux conducteurs lignes.

Dans chaque point photosensible P1 à P9, les deux diodes Dp, Dc sont reliées entre elles soit par leur anode, soit par leur cathode comme dans l'exemple représenté. L'anode de la photodiode Dp est reliée à un conducteur colonne X1 à X3, et l'anode de la diode de commutation Dc est reliée à un conducteur ligne Y1 à Y3.

Dans la phase d'acquisition d'image ou de prise d'image, c'est à dire d'éclairement de la matrice 2 par un signal lumineux dit " utile ", les deux diodes Dp, Dc de chaque point photosensible P1 à P9 sont polarisées en inverse, et dans cet état elles constituent chacune une capacité. Il est à noter que généralement les deux diodes Dp, Dc sont conçues pour que la capacité présentée par la photodiode Dp soit la plus forte (de l'ordre par exemple de 50 fois).

Lors de l'exposition à un signal lumineux utile, des charges sont engendrées dans la photodiode Dp par l'éclairement du point photosensible P1 à P9 auquel elle appartient. Ces charges dont la quantité est fonction de l'intensité d'éclairement, s'accumulent en un point " A " sur le noeud (flottant) formé au point de jonction des deux diodes Dp, Dc. La lecture des points photosensibles P1 à P9 s'effectue ligne par ligne, simultanément pour tous les points photosensibles reliés à un même conducteur ligne Y1 à Y3. A cet effet, le circuit de commande ligne 3 applique à chaque conducteur ligne Y1 à Y3 adressé, une impulsion dite de lecture d'une amplitude donnée ; les conducteurs ligne qui ne sont pas adressés sont maintenus à un potentiel de référence Vr ou potentiel de repos, qui est la masse par exemple, et qui peut être le même potentiel que celui qui est appliqué aux conducteurs colonne X1 à X3.

L'éventuelle accumulation de charges au point " A " d'un point photosensible P1 à P9, entraîne en ce point une diminution de la tension, c'est à dire une diminution de la tension de polarisation inverse de la photodiode Dp. Avec certains modes de fonctionnement, l'application de l'impulsion de lecture à un conducteur ligne Y1 à Y3 a pour effet de restituer au potentiel du point " A " de tous les points photosensibles reliés à ce conducteur ligne, le niveau de polarisation qu'il possédait avant l'exposition au signal lumineux utile : il en résulte une circulation dans chacun des conducteurs colonne X1 à X3, d'un courant proportionnel aux charges accumulées au point " A " correspondant.

Les conducteurs colonne X1 à X3 sont reliés à un circuit de lecture CL, comprenant dans l'exemple un circuit intégrateur 5, et un circuit multiplexeur 6 formé par exemple d'un registre à décalage à entrées parallèles et sortie série pouvant être du type C.C.D ( de l'anglais " Charge Coupled Device "). Chaque conducteur colonne est relié à une entrée négative " - " d'un amplificateur G1 à G3 monté en intégrateur. Une capacité d'intégration C1 à C3 est montée entre l'entrée négative " - " et une sortie S1 à S3 de chaque amplificateur. La seconde entrée " + " de chaque amplificateur G1 à G3 est reliée à un potentiel qui dans l'exemple est le potentiel de référence Vr, potentiel qui par suite est imposé à tous les conducteurs colonne X1 à X3. Chaque amplificateur comporte un élément interrupteur I1 à I3 dit de remise à zéro ( constitué par exemple par un transistor du type MOS), monté en parallèle avec chaque capacité d'intégration C1 à C3.

Les sorties S1 à S3 des amplificateurs sont reliées aux entrées Et à E3 du multiplexeur 6. Cette disposition classique permet de délivrer " en série " et ligne après ligne, (L1 à L3) en sortie SM du multiplexeur 6, des signaux qui correspondent aux charges accumulées aux points " A " de tous les points photosensibles P1 à P9.

Il est à noter qu'il est connu aussi, pour remplir la fonction d'interrupteur qui dans l'exemple de la figure 1 est tenue par la diode de commutation Dc, d'utiliser un transistor ; ce dernier présente par rapport à la diode une plus grande complexité de connexion, mais il offre des avantages dans la qualité de son état " passant ", avantages qui seront évoqués dans la suite de la description.

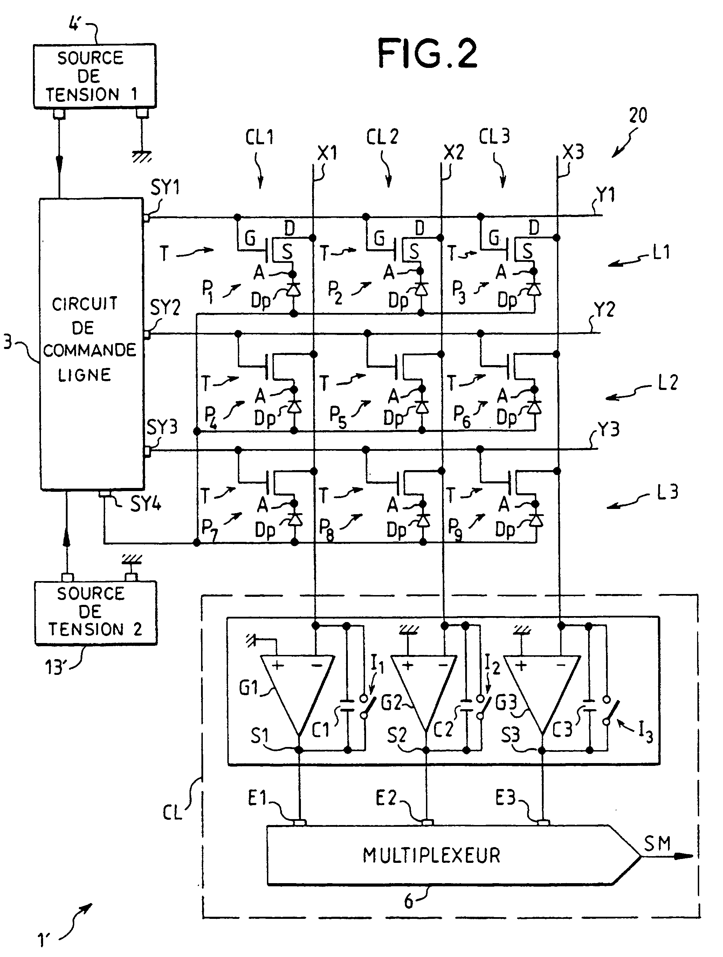

La figure 2 illustre schématiquement un dispositif photosensible 1' qui diffère de celui de la figure 1, principalement en ce qu'il comporte une matrice 20 dans laquelle les diodes de commutation Dc, sont remplacées par des transistors T réalisés également par les techniques de dépôt de films en couches minces (TFT).

Dans le schéma montré à la figure 2 à titre d'exemple, dans chaque point photosensible P1 à P9, le transistor T est relié par sa source S à la cathode de la photodiode Dp c'est à dire au point " A ", sa grille G est reliée au conducteur ligne Y1 à Y3 auquel appartient le point photosensible, et son drain D est relié au conducteur colonne X1 à X3 auquel appartient le point photosensible. Les anodes de toutes les photodiodes Dp sont réunies, et reliées à une sortie SP4 du circuit de commande ligne 3. La sortie SP4 délivre une tension dite de polarisation VpL, négative par rapport au potentiel de référence VR ou masse, de l'ordre par exemple de -5 volts, qui sert à constituer la polarisation en inverse des photodiodes Dp ; le circuit de commande ligne 3 reçoit par exemple cette tension de polarisation d'une source d'alimentation 4'.

Dans cette configuration, le circuit de commande ligne 3 délivre par ses sorties SY1 à SY3, des signaux ou impulsions avec une même synchronisation que dans le cas de la figure 1, signaux qui mettent à l'état " passant " simultanément tous les transistors T d'une même ligne L1 à L3. La mise à l'état " passant " d'un transistor T provoque, dans chaque point photosensible, l'application de la tension de référence VR à la cathode de la photodiode Dp : d'où il résulte d'une manière en elle-même bien connue, soit une polarisation en inverse initiale de la photodiode (en prévision d'une phase de prise d'image) ; soit la remise au niveau de polarisation inverse initiale (lors d'une phase de lecture), avec circulation dans les conducteurs colonnes X1 à X3 d'un courant représentant la quantité de charges accumulées dans les points photosensibles P1 à P9 appartenant à la ligne L1 à L3 adressée. Le reste du fonctionnement est semblable à celui déjà expliqué.

La proportionnalité entre la valeur délivrée en sortie du multiplexeur 6 et l'intensité du signal lumineux utile capté par un point photosensible peut être altérée par différentes causes, parmi lesquelles les phénomènes de rémanence sont particulièrement pénalisants, du fait notamment qu'ils peuvent introduire, lors de la mesure de l'éclairement d'un point photosensible après une prise d'image, une corrélation avec l'éclairement de ce même point photosensible lors d'une prise d'image précédente.

La cause de rémanence la plus importante, dans le cas des matrices dont les points photosensibles sont réalisées à partir de matériaux semi-conducteur, et encore plus particulièrement dans le cas du silicium amorphe (aSi), réside pour l'essentiel dans une forte densité d'états profonds dans la bande interdite du matériau : dans le cas par exemple du silicium amorphe, l'absence de réseau cristallin ménage des pièges pouvant retenir des charges engendrées lors d'une prise d'image. Dans ces conditions, le matériau semi-conducteur peut en quelque sorte " mémoriser " une image correspondant à un éclairement donné, et restituer des charges relatives à une image au cours de la lecture d'une image suivante, voire de plusieurs images suivantes.

En vue de réduire voire de supprimer le défaut de rémanence ci-dessus indiqué, l'invention propose de produire un courant permettant de remplir ou saturer les pièges (ou états profonds) présents dans la structure du matériau semi-conducteur, de façon que ces pièges se vident alors avec une statistique qui n'a plus rien à voir avec l'image précédente, d'ou résulte une complète absence de corrélation et donc une absence de rémanence.

L'invention concerne donc un procédé de commande d'un dispositif photosensible comportant une matrice de points photosensibles, les points photosensibles étant agencés en au moins une ligne et en au moins une colonne et comprenant chacun un élément interrupteur en série avec une photodiode avec un point commun, le procédé consistant d'une part à exposer la matrice à un signal lumineux dit utile durant une phase de prise d'image au cours de laquelle, des charges produites dans chaque point photosensible en fonction de son exposition modifient une tension de polarisation de la photodiode, et consistant d'autre part à lire les points photosensibles dans une phase de lecture survenant après la phase de prise d'image, ledit procédé étant caractérisé en ce qu'il consiste en outre au moins une fois avant la phase de prise d'image, dans un premier temps à exposer les points photosensibles de la matrice à un flux lumineux dit d'effacement ayant une intensité et une durée telles que les charges qu'il engendre modifient la tension des points communs jusqu'à ce qu'elle atteigne la tension de coude des photodiodes de manière à provoquer leur mise en conduction dans le sens direct et dans un second temps à polariser en inverse toutes les photodiodes de manière à ce que les points photosensibles puissent produire et accumuler les charges au cours de la phase de prise d'image.

Il est à noter que le procédé de l'invention permet en outre, de façon simple, d'améliorer l'efficacité de lecture des points photosensibles, particulièrement quand les charges qui y sont accumulées sont de faible valeur. Une solution à ce problème est connue par une demande de brevet français n° 88 12126 publiée avec le n° 2 636 800. Cette solution s'applique dans le cas où les points photosensibles sont constitués chacun par une photodiode montée en série avec une diode faisant fonction d'élément interrupteur, et avec les deux diodes montées dans une configuration tête-bêche, comme dans l'exemple de la figure 1.

Cette demande de brevet propose de créer par un éclairement additionnel, des charges dites d'entraînement qui sont ajoutées dans chaque point photosensible aux charges " signal " produites par l'exposition au signal lumineux utile. Cet éclairement additionnel peut être obtenu par différents types de source de lumière, par exemple par une lumiplaque ou un réseau de diodes électroluminescentes comme décnt dans une demande de brevet français n° 2 598 250.

En référence à nouveau à la figure 1, si la matrice 2 est réalisé sur un substrat isolant 7 (représenté en trait plein) transparent à la lumière, en verre ou quartz par exemple comme décrit dans la demande n° 2.605.166 précédemment citée, une source de lumière additionnelle SL (symbolisée en pointillé) peut être plaquée sur le substrat 7, à l'opposé de la matrice 1 pour ne pas faire écran au signal lumineux utile. Par exemple, en supposant que le substrat 7 soit situé dans un même plan que celui de la figure, la source de lumière SL est située dans un plan plus profond que celui de la figure. Bien entendu, le dispositif de la figure 2 peut lui aussi comporter une telle source de lumière additionnelle (non représentée à la figure 2).

Les charges d'entraînement additionnées aux charges créées par le signal lumineux utile, permettent de minimiser l'effet néfaste (aux très faibles valeurs) produit par les qualités médiocres que présente une diode de commutation utilisée en tant que interrupteur à l'état " fermé ", c'est à dire à l'état " passant ". Ceci est du notamment à une non-linéarité dans la caractéristique courant-tension des diodes, dans leur mode de conduction dans le sens direct. Cependant cette solution qui utilise un flash optique pour produire les charges d'entraînement, présente comme inconvénient de produire aussi un bruit important (associé au flash optique).

Le procédé de l'invention présente comme avantage de permettre aisément d'ajouter des charges d'entraînement, dans un même but que celui recherché dans la demande de brevet n° 2 605 166, mais par une méthode électrique qui engendre un bruit beaucoup plus faible qu'une méthode optique.

D'autres caractéristiques et avantages de l'invention apparaîtront à la lecture de la description détaillée qui suit, faite à titre d'exemple non limitatif en référence aux dessins annexés dans lesquels :
- les figures 1 et 2 représentent des dispositifs photosensibles auxquels peut s'appliquer le procédé de l'invention ;
- les figures 3a à 3e constituent un chronogramme illustrant le fonctionnement des dispositifs des figures 1 et 2, sous la commande du procédé de l'invention.

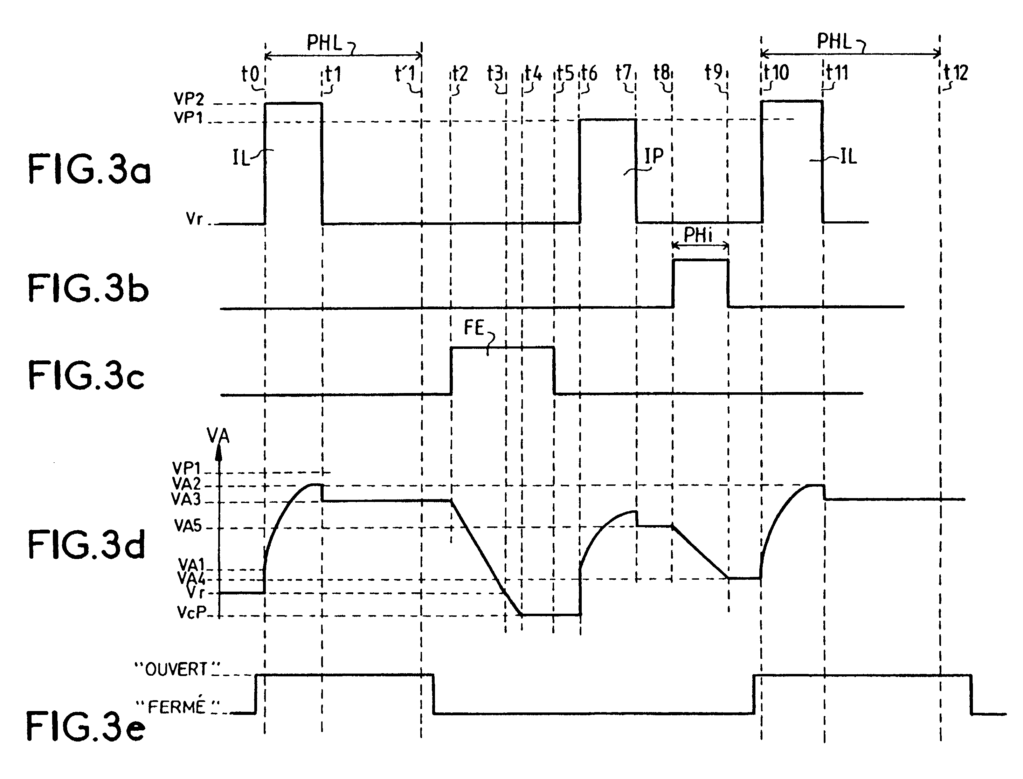

En prenant pour exemple le dispositif photosensible de la figure 1, dont chaque point photosensible P1 à P9 comporte une diode de commutation Dc pour remplir la fonction d'interrupteur, la figure 3a représente des signaux appliqués sur un conducteur ligne Y1 à Y3, le premier conducteur Y1 par exemple ; et la figure 3d représente les variations d'une tension VA au point " A " à potentiel flottant des points photosensibles, du premier point photosensible P1 par exemple.

Dans l'exemple non limitatif décrit, un début de cycle de fonctionnement se situe après un instant t1 qui marque la fin d'une impulsion de lecture IL appliquée au premier conducteur ligne Y1. Cette impulsion de lecture IL a débuté à un instant t0 du début d'une phase de lecture PHL d'un cycle de fonctionnement précédent, et elle a permis de lire les points photosensibles P1 à P3 exposés lors d'une phase de prise d'image de ce cycle précédent.

Compte tenu des sens de conduction des diodes Dc, Dp de chaque point photosensible P1 à P9 de l'exemple montré à la figure 1, l'impulsion de lecture IL a un signe positif par rapport à la tension de référence VR, et une amplitude VP2. Elle met la diode de commutation Dc en conduction directe, et cette dernière charge la capacité que constitue la photodiode Dp : de telle sorte que la tension VA au point " A ", dans un premier temps, passe à une valeur VA1 qui correspond à la tension de coude de la diode de commutation Dc, puis va en augmentant jusqu'à une valeur VA2, égale sensiblement à VP2 moins la valeur de la tension de coude de la diode de commutation Dc. La charge de la capacité formée par la photodiode Dp provoque sur le conducteur colonne X1, la circulation d'un courant correspondant aux charges accumulées au point " A ".

A l'instant t1 où l'impulsion de lecture IL cesse et où la tension sur le conducteur ligne Y1 retourne à la valeur de repos c'est à dire à la tension de référence Vr, la diode de commutation Dc est mise en polarisation inverse et constitue une capacité : la tension VA au point " A " diminue à une valeur VA3 par division capacitive.

Bien entendu, tous les conducteur lignes Y1 à Y3 reçoivent l'un après l'autre une impulsion de lecture IL durant cette phase de lecture PHL qui cesse à un instant t1', et l'évolution de la tension VA au point " A " des points photosensibles de toutes les lignes L1 à L3 de la matrice 1 est semblable à celle décrite ci-dessus.

Conformément à une caractéristique du procédé de l'invention, un flux lumineux FE appelé " flux lumineux d'effacement " représenté à la figure 3c, est appliqué à tous les points photosensibles P1 à P9 de la matrice 2, avant d'effectuer toute prise d'image.

Le flux lumineux d'effacement FE est appliqué à tous les points photosensibles P1 à P9, à un instant t2 qui suit l'instant t1' de la fin de phase de lecture du cycle précédent. Ce flux lumineux d'effacement doit avoir une intensité et une durée suffisantes pour que les charges qu'il engendre, accumulées aux points " A " à potentiel flottant, modifient la tension VA en ces points " A " (et donc la polarisation des photodiodes Dp) jusqu'à mettre les photodiodes Dp en conduction dans leur sens direct.

Cet effet de l'application du flux d'effacement FE apparaît à la figure 3d où l'on voit que à partir de l'instant t2, la tension VA varie (dans le sens d'une diminution) jusqu'à un instant t3 où elle atteint la tension de référence Vr, et où elle change de signe pour croitre à nouveau jusqu'à une valeur VcP (négative dans l'exemple representé) qui correspond à la tension de coude de la diode photosensible Dp. A partir d'un instant t4 où est atteinte la valeur VcP correspondant à la tension de coude de la photodiode Dp, cette dernière conduit un courant dans son sens de conduction direct. Par suite, à partir de l'instant t4, la tension VA au point " A " conserve sensiblement une même valeur jusqu'à un instant t5 où cesse l'application du flux d'effacement FE et où cesse également le courant dans la photodiode Dp.

Le courant correspondant à la mise en conduction dans le sens direct de la photodiode Dp tend, comme il a été précédemment expliqué, à saturer les " pièges " qui existent dans le matériau semi- conducteur (aSiH par exemple), et tend ainsi à " effacer " les traces d'une prise d'image précédente et à éviter toutes corrélation entre cette prise d'image précédente et une prise d'image à venir.

La source de lumière permettant de produire le flux d'effacement est en elle-même d'un type classique. Elle peut être constituée par exemple par une source de lumière telle que la source de lumière additionnelle SL précédemment mentionnée, c'est à dire par une lumiplaque ou par un réseau de diodes électroluminescentes, et elle peut être également disposée contre le substrat transparent 7 (figure 1) à l'opposé de la matrice 2 (il est à noter que la source de lumière SL pourrait aussi être située du côté de la matrice 1, à condition de ne pas nuire à la bonne exposition de la matrice 2 par le signal lumineux utile, lors d'une prise d'image). La commande de la source de lumière SL peut être accomplie d'une manière en elle-même classique, à partir par exemple d'un signal délivré par une sortie Ssl du circuit de commande ligne 3 (figure 1). Bien entendu le dispositif photosensible de la figure 2 peut lui aussi comporter une source de lumière SL (non représentée à la figure 2), disposée dans les mêmes conditions que ci-dessus expliqué.

En référence à nouveau aux figures 3a à 3e, pour que les points photosensibles P1 à P9 puissent produire et accumuler des charges au cours d'une prise d'image, il est nécessaire de placer les photodiodes Op dans l'état de polarisation inverse. A cette fin, le procédé de l'invention consiste à appliquer à tous les conducteurs ligne Y1 à Y3, une impulsion de tension dite impulsion de polarisation IP (représentée à la figure 3a) ayant une amplitude VP1, positive par rapport la tension de référence VR, c'est à dire ayant le même signe que l'impulsion de lecture IL.

Une impulsion de polarisation IP peut être appliquée à tous les conducteurs ligne Y1 à Y3 par le circuit de commande ligne 3, soit de manière simultanée à tous ces conducteurs, soit ligne après ligne. Ce qui s'impose, c'est que tous les conducteurs lignes Y1 à Y3 et donc tous les points photosensibles P1 à P9, reçoivent l'impulsion de polarisation IP avant la phase de prise d'image.

A un instant t6 où débute (fig. 3a) une impulsion de polarisation IP reçue par le premier conducteur ligne Y1, la tension VA au point " A " de tous les points photosensibles reliés à ce conducteur, change de signe et passe à la valeur VA1 qui est la tension de coude de la diode de commutation Dc. Cette dernière est alors remise en conduction directe et la photodiode Dp étant alors redevenue polarisée en inverse, sa capacité est chargée par la diode de commutation Dc : en conséquence, la tension VA augmente pour atteindre à un instant t7 où cesse l'impulsion de polarisation IP, une valeur qui correspond à l'amplitude Vp1 de cette impulsion de polarisation moins la valeur de la tension de coude de la diode de commutation Dc, d'une façon qui en elle-même est comparable à celle déjà décrite pour l'intervalle de temps entre l'instant t0 et l'instant t1.

Le procédé de l'invention offre un avantage très important, qui réside dans la possibilité de créer des charges d'entraînement d'une manière simple, et avec une grande qualité (faible bruit). Il suffit à cet effet de conférer aux impulsions de polarisation IP une amplitude VP1 inférieure à l'amplitude VP2 des impulsions de lecture IL

En effet, en supposant par exemple d'une part, que la tension VA au point " A " juste avant une phase de prise d'image, ait la valeur VA3 affichée à l'instant t1 (ce qui serait le cas si l'impulsion de polarisation IP avait une même amplitude VP2 que l'impulsion de lecture IL), et en supposant d'autre part que cette prise d'image ne procure aucun éclairement du premier point photosensible P1, et si l'on ne tient pas compte d'éventuelles dérives et courants d'obscurité, la tension VA au point " A " aura conservé la valeur VA3 après la prise d'image : en conséquence, l'application ultérieure d'une impulsion de lecture IL ne produira pas la charge de la capacité formée par la photodiode (quand elle est polarisée en inverse) et aucune charge ne sera transmise sur le conducteur colonne correspondant, soit le premier conducteur colonne X1.

Si au contraire, l'amplitude VP1 de l'impulsion de polarisation IP est inférieure à celle VP2 de l'impulsion de lecture IL, à l'instant t7 elle confère à la tension VA au point " A " avant le prise d'image, une valeur VA5 inférieure à la valeur VA3 conférée par l'impulsion de lecture IL : par suite on obtiendra avec l'application d'une impulsion de lecture IL, un courant sur le premier conducteur colonne X1, courant qui représentera une charge dite d'entraînement dont l'intensité sera proportionnelle à la différence VA3 - VA5.

Ces explications montrent qu'une impulsion de polarisation IP ayant une amplitude VP1 inférieure à l'amplitude VP2 de l'impulsion de lecture, peut engendrer des charges d'entraînement dont la valeur est fonction de la différence entre les amplitudes VP1 et VP2.

Le dispositif photosensible 1 de la figure 1 peut comporter, en vue de créer des charges d'entraînement, une seconde source de tension 13 délivrant au circuit de commande ligne 3, une tension ayant la valeur de l'amplitude VP1 de l'impulsion de polarisation IP ; la tension délivrée par la première source 4 ayant par exemple la valeur de l'amplitude VP2 de l'impulsion de lecture IL. Le circuit de commande ligne 3 peut ainsi, d'une manière en elle-même connue, sélectionner l'une ou l'autre des deux tension et la délivrer sous forme d'impulsions aux conducteurs lignes Y1 à Y3 aux instants appropriés.

Les charges d'entraînement peuvent s'avérer utiles dans les cas notamment de faibles valeurs d'exposition, et ceci particulièrement pour des points photosensibles dont l'élément interrupteur est une diode, du fait de la non-linéarité dans la caractéristique courant-tension en mode direct que présente une diode.

Quand il n'est pas utile d'utiliser des charges d'entraînement, par exemple avec des signaux lumineux de forte intensité, et quand l'élément interrupteur des points photosensibles est un transistor comme dans le cas de la matrice 20 de la figure 2, il suffit de donner aux impulsions de polarisation et de lecture IP, IL une même amplitude, pour éviter de produire ces charges d'entraînement.

Cependant même dans le cas de la matrice 20 utilisant des transistors comme élément interrupteur, si ces charges d'entraînement sont nécessaires, le dispositif photosensible de la figure 2 peut comporter lui aussi une seconde source de tension 13', appliquant au circuit de commande ligne 3 une seconde tension de polarisation VpP inférieure à la première tension de polarisation VpL ; le circuit de commande ligne 3 peut ainsi sélectionner entre les deux tensions VpL et VpP celle qu'il convient d'appliquer par sa sortie SP4, aux anodes des photodiodes Dp, suivant que l'état " passant " des transistors T est commandé pour accomplir une polarisation initiale ou pour une phase de lecture.

En supposant (à nouveau dans le cas du dispositif photosensible de la figure 1) que l'impulsion de polarisation IP ait l'amplitude VP1 (la plus faible), la tension VA au point " A " conserve la valeur VA5 au moins jusqu'à un instant t8, où survient une phase de prise d'image représentée à la figure 3b par un créneau Phi. Si à partir de l'instant t8 le point photosensible P1 est soumis à un éclairement par un signal lumineux " utile ", les charges alors produites et accumulées au point " A " provoquent (comme dans l'exemple représenté à la figure 3d) une diminution de la tension VA en ce point. Cette diminution est continue (si l'éclairement est constant), et elle cesse à un instant t9 qui marque la fin de la phase de prise d'image. La tension VA au point " A " possède à cet instant par exemple une valeur VA4 qui est conservée jusqu'à un instant t10

A l'instant t10, une impulsion de lecture IL est appliquée au premier conducteur ligne Y1. Elle marque le début d'une phase de lecture PHL servant à lire les charges produites dans la phase de prise d'image PHi. On retrouve au point " A " une évolution de la tension VA semblable à celle déjà décrite pour l'intervalle de temps compris entre les instants t0 et t1 : la tension VA passe à la valeur VA1 avec l'application de l'impulsion de lecture IL ; puis la diode de commutation Dc étant en état de conduire, elle charge la capacité formée par la photodiode Dp ce qui détermine un courant sur le conducteur colonne X1 ; la tension VA augmente alors jusqu'à sa valeur maximum VA2. A un instant t11 où se termine l'impulsion de lecture IL, la tension VA passe à la valeur VA3 (comme à l'instant t1).

Des impulsions de lectures (non représentées) sont ensuite appliquées successivement sur les conducteurs ligne Y2, Y3, pendant le reste de la phase de lecture PHL dont la fin survient à un instant t12.

La figure 3e représente les états " ouvert " et " fermé " des interrupteurs de remise à zéro 11, 12, 13, interrupteurs qui n'autorisent l'opération d'intégration par les amplificateurs G1, G2, G3 que quand ils sont à l'état " ouvert ". La figure 3e illustre le fait que ces interrupteurs I1 à I3 ne sont à l'état " ouvert " que pendant les phases de lecture PHL, et que par conséquent, seuls les courants circulant dans les conducteurs colonne X1 à X3 durant les phases de lecture sont pris en compte.

Les différents intervalles de temps compris entre les instants t1' et t12, correspondent à différentes étapes d'une séquence complète de fonctionnement d'un dispositif photosensible commandé conformément au procédé de l'invention. La fin de la phase de lecture à l'instant t12 marque le début d'une éventuelle séquence de fonctionnement suivante.

Il est à remarquer que, si le niveau de rémanence résiduelle pouvant être toléré est très bas, il est encore possible de l'améliorer en procédant à plusieurs opérations d'effacement dans une même séquence de fonctionnement, c'est à dire que entre les instants t2 et t7, on peut exposer plusieurs fois les points photosensibles P1 à P9 de la matrice au flux lumineux d'effacement FE , chaque application d'un flux d'effacement étant suivi de l'application d'une impulsion de polarisation IP.

Cette description du procédé de l'invention a été faite en référence à des matrices 2, 20, ayant des points photosensible P1 à P9 dont les diodes de commutation Dc et les photodiodes Dp sont montées avec des sens de conduction donnés, montrés dans le figures 1 et 2. Mais le procédé de l'invention peut s'appliquer tout aussi bien si ces diodes Dc, Dp sont montées avec des sens de conduction contraires de ceux représentés dans ces figures. Il suffit pour cela d'inverser le signe des impulsions de lecture IL et des impulsions de polarisation IP, ainsi que des tensions de polarisation.

Le procédé de l'invention est applicable également à la commande de dispositifs photosensibles utilisés pour la détection d'image radiologiques. Ces dispositifs photosensibles doivent alors comporter un scintillateur pour convertir un rayonnement incident notamment un rayonnement X, en un rayonnement lumineux dans la bande de longueurs d'onde auxquelles les photodiodes Dp sont sensibles. En prenant pour exemple le dispositif 1 montré à la figure 1, un tel scintillateur peut être constitué par une couche 9 (symbolisée sur la figure 1 par un carré en traits pointillés) d'une substance scintillatrice par exemple en lodure de Césium (Csl) ; cette couche 9 scintillatrice est déposée par dessus la matrice 2, de manière à être interposée entre cette dernière et le rayonnement X incident. Le dispositif photosensible 1' de la figure 2 peut lui aussi comporter un écran scintillateur 9 (non représenté), disposé d'une même manière que celui du dispositif de la figure 1.

Il est à remarquer que le procédé de l'invention s'applique de manière particulièrement intéressante dans le cas où le scintillateur 9 est en lodure de Césium (Csl), car cette substance scintillatrice est connue pour sa très faible rémanence intrinsèque. Le fait de coupler un scintillateur en lodure de Césium à une matrice 2, 20, dont les photodiodes Dp sont en silicium amorphe hydrogéné (aSiH), sous la commande du procédé de l'invention qui élimine la rémanence propre au silicium amorphe hydrogéné, permet d'obtenir des images radiologique d'une très haute qualité

## Revendications

1. Procédé de commande d'un dispositif photosensible (1, 1') comportant une matrice (2, 20) de points photosensibles (P1 à P9), les points photosensibles étant agencés en au moins une ligne (L1 à L3) et en au moins une colonne (CL1 à CL3) et comprenant chacun un élément interrupteur (Cd, T) en série avec une photodiode (Dp) avec un point commun, le procédé consistant d'une part à exposer la matrice (2, 20) à un signal lumineux dit utile durant une phase de prise d'image (Phi) au cours de laquelle, des charges produites dans chaque point photosensible (P1 à P9) en fonction de son exposition modifient une tension de polarisation (Va3, Va5) de la photodiode (Dp), et consistant d'autre part à lire les points photosensibles dans une phase de lecture (PHL) survenant après la phase de prise d'image (Phi), ledit procédé étant **caractérisé en ce qu'**il consiste en outre au moins une fois avant la phase de prise d'image (PHi), dans un premier temps à exposer les points photosensibles de la matrice (2, 20) à un flux lumineux dit d'effacement (FE) ayant une intensité et une durée telles que les charges qu'il engendre modifient la tension des points communs jusqu'à ce qu'elle atteigne la tension de coude des photodiodes de manière à provoquer leur mise en conduction dans le sens direct et dans un second temps à polariser en inverse toutes les photodiodes (Dp) de manière à ce que les points photosensibles puissent produire et accumuler les charges au cours de la phase de prise d'image.

2. Procédé de commande suivant la revendication 1, **caractérisé en ce que** l'élément de commutation est une diode dite de commutation (Dc).

3. Procédé de commande suivant la revendication précédente, **caractérisé en ce que** à chaque ligne (L1 à L3) correspond un conducteur ligne (Y1 à Y3) et **en ce que** à chaque colonne (CL1 à CL3) correspond un conducteur colonne (X1 à X3), et **en ce que** dans les points photosensibles (P1 à P9) la diode de commutation (Dc) et la photodiode (Dp) sont montées entre un conducteur ligne (Y1 à Y3) et un conducteur colonne (CL1 à CL3) avec des sens de conduction inverses l'une par rapport à l'autre.

4. Procédé de commande suivant la revendication précédente, **caractérisé en ce qu'**il consiste à appliquer à chaque conducteur ligne (Y1 à Y3) une impulsion dite de polarisation (IP) dont le signe correspond à polariser en inverse les photodiodes (Dp), et dont l'amplitude (VP1) détermine la valeur de la polarisation en inverse de ces photodiodes, et **en ce que** durant la phase de lecture (PHL), il consiste à appliquer à chaque conducteur ligne (Y1 à Y3) une impulsion de lecture (IL) ayant une amplitude (VP2) donnée et un même signe que l'impulsion de polarisation (IP).

5. Procédé de commande suivant la revendication précédente, **caractérisé en ce que** l'impulsion de polarisation (IP) possède une même amplitude que celle (VP2) de l'impulsion de lecture (IL).

6. Procédé de commande suivant la revendication 4, **caractérisé en ce que** l'impulsion de polarisation (IP) possède une amplitude (VP1) inférieure à l'amplitude (VP2) de l'impulsion de lecture (IL).

7. Procédé de commande suivant la revendication 1, **caractérisé en ce que** l'élément de commutation est un transistor (T).

8. Procédé de commande suivant la revendication 7, **caractérisé en ce que** à chaque ligne (L1 à L3) correspond un conducteur ligne (Y1 à Y3) et **en ce que** à chaque colonne (CL1 à CL3) correspond un conducteur colonne (X1 à X3), et **en ce que** dans les points photosensibles (P1 à P9), le transistor (T) est relié par sa grille (G) à un conducteur ligne (Y1 à Y3) et par sa source (S) à une première extrémité (cathode ou anode) de la photodiode (Dp) et enfin par son drain (D) à un conducteur colonne (X1 à X3), la seconde extrémité (anode ou cathode) de toutes les photodiodes (Dp) recevant une tension de polarisation (VpP, VpL) permettant de polariser en inverse ces photodiodes.

9. Procédé de commande suivant la revendication 8, **caractérisé en ce que** la valeur de la tension de polarisation (VpP, VpL) est différente suivant qu'elle est appliquée avant une phase de prise d'image (Phi) ou pour une phase de lecture (PHL).

10. Procédé de commande suivant l'une des revendications précédentes, **caractérisé en ce que** au moins les photodiodes (Dp) sont réalisées avec du silicium amorphe hydrogéné (aSiH).

11. Procédé de commande suivant l'une des revendications précédentes, **caractérisé en ce que** la matrice (2,20) est réalisée par des techniques de dépôts en films minces.

12. Procédé de commande suivant l'une des revendications précédentes, **caractérisé en ce qu'**il consiste à réaliser la matrice (2,20) sur un substrat (7) transparent à la lumière.

13. Procédé de commande suivant la revendication précédente, **caractérisé en ce qu'**il consiste à disposer une source de lumière (SL) sur une face du substrat (7) opposée à la face qui porte la matrice (2,20).

14. Procédé de commande suivant l'une des revendications précédentes, **caractérisé en ce qu'**il consiste à interposer un écran scintillateur (9) entre un rayonnement incident et la matrice (2,20).

15. Procédé de commande suivant la revendication précédente, **caractérisé en ce que** le rayonnement incident est un rayonnement X.

16. Dispositif photosensible mettant en oeuvre le procédé suivant l'une quelconque des revendications 1 à 15, comportant une matrice (2, 20) de points photosensibles (P1 à P9) agencés en lignes (au moins une ligne) et en colonnes (au moins une colonne), chaque point photosensible étant situé au croisement d'une ligne (L1 à L3) et d'une colonne (CL1 à CL3) et comprenant un élément interrupteur (Cd, T) en série avec une photodiode (Dp), chaque photodiode (Dp) étant polarisée en inverse durant une phase de prise d'image (Phi), la jonction entre une photodiode (Dp) et un élément interrupteur (Cd, T) constituant un point commun (A) à potentiel flottant où sont accumulées des charges produites par la photodiode (Dp), le dispositif photosensible étant **caractérisé en ce qu'**il comporte des premiers moyens (SL) permettant d'exposer la matrice (2, 20) à un flux lumineux dit d'effacement (FE) ayant une intensité et une durée telles que les charges qu'il engendre modifient la tension des points communs jusqu'à ce qu'elle atteigne la tension de coude des photodiodes de manière à provoquer leur mise en conduction dans le sens direct, et des seconds moyens (3, 13) permettant, après l'application du flux lumineux d'effacement (FE) et avant la phase de prise d'image, de polariser en inverse les photodiodes (Dp) de manière à ce que les points photosensibles puissent produire et accumuler les charges au cours de la phase de prise d'image.

17. Dispositif photosensible selon la revendication 16, **caractérisé en ce que** les seconds moyens (3, 13) permettent d'appliquer à chaque point photosensible (P1 à P9) une impulsion de polarisation ayant un même signe qu'une impulsion de lecture (IL) appliquée aux points photosensibles (P1 à P9) durant une phase de lecture survenant après la phase de prise d'image.

18. Dispositif photosensible selon la revendication 17, **caractérisé en ce que** l'impulsion de polarisation (IP) a une amplitude (VP1) inférieure à l'amplitude (VP2) de l'impulsion de lecture (IL).

19. Dispositif photosensible selon la revendication 17, **caractérisé en ce que** l'impulsion de polarisation (IP) a une amplitude (VP1) égale à celle de l'impulsion de lecture (IL).

20. Dispositif photosensible selon l'une des revendications 16 à 19, **caractérisé en ce que** l'élément interrupteur est un transistor (T).

21. Dispositif photosensible selon l'une des revendications 16 à 19, **caractérisé en ce que** l'élément interrupteur est une diode (Dc).

22. Dispositif photosensible selon l'une des revendications 16 à 21, **caractérisé en ce que** au moins la photodiode (Dp) est réalisée en silicium amorphe hydrogéné (aSiH).

23. Dispositif photosensible selon l'une des revendications 16 à 22, **caractérisé en ce que**, d'une part la matrice (2,20) est réalisée sur un substrat (7) transparent, et d'autre part **en ce qu'**il comporte une source de lumière (SL) disposée sur une face du substrat opposée à la face qui porte la matrice.

24. Dispositif photosensible selon l'une des revendications 16 à 23, **caractérisé en ce qu'**il comporte un écran scintillateur (9), convertissant un rayonnement X en un rayonnement lumineux dans la bande de longueurs d'onde auxquelles sont sensibles les photodiodes (DP).

## Patentansprüche

1. Verfahren zur Steuerung einer lichtempfindlichen Vorrichtung (1, 1'), die eine Matrix (2, 20) von lichtempfindlichen Punkten (P1 bis P9) aufweist, wobei die lichtempfindlichen Punkte in mindestens einer Zeile (L1 bis L3) und mindestens einer Spalte (CL1 bis CL3) angeordnet sind und je ein Schaltelement (Cd, T) in Reihe mit einer Fotodiode (Dp) mit einem gemeinsamen Punkt aufweisen, wobei das Verfahren einerseits darin besteht, die Matrix (2, 20) während einer Bildaufnahmephase (Phi), während der in jedem lichtempfindlichen Punkt (P1 bis P9) in Abhängigkeit von seiner Belichtung erzeugte Ladungen eine Vorspannung (Va3, Va5) der Fotodiode (Dp) verändern, einem Nutz-Lichtsignal auszusetzen, und andererseits darin besteht, die lichtempfindlichen Punkte in einer Lesephase (PHL) zu lesen, die nach der Bildaufnahmephase (Phi) auftritt, **dadurch gekennzeichnet, dass** das Verfahren außerdem mindestens einmal vor der Bildaufnahmephase (Phi) darin besteht, zunächst die lichtempfindlichen Punkte der Matrix (2, 20) einem Löschungs-Lichtstrom (FE) einer solchen Stärke und einer solchen Dauer auszusetzen, dass die von ihm erzeugten Ladungen die Spannung der gemeinsamen Punkte so weit verändern, bis sie den Spannungsknick der Fotodioden erreicht, um diese in Durchlassrichtung leitend zu machen, und dann alle Fotodioden (Dp) in Sperrrichtung vorzuspannen, damit die lichtempfindlichen Punkte die Ladungen während der Bildaufnahmephase erzeugen und akkumulieren können.

2. Steuerverfahren nach Anspruch 1, **dadurch gekennzeichnet, dass** das Schaltelement eine Schaltdiode (Dc) ist.

3. Steuerverfahren nach dem vorhergehenden Anspruch, **dadurch gekennzeichnet, dass** jeder Zeile (L1 bis L3) ein Zeilenleiter (Y1 bis Y3) und jeder Spalte (CL1 bis CL3) ein Spaltenleiter (X1 bis X3) entspricht, und dass in den lichtempfindlichen Punkten (P1 bis P9) die Schaltdiode (Dc) und die Fotodiode (Dp) zwischen einem Zeilenleiter (Y1 bis Y3) und einem Spaltenleiter (CL1 bis CL3) mit einander entgegengesetzten Leitrichtungen angeordnet sind.

4. Steuerverfahren nach dem vorhergehenden Anspruch, **dadurch gekennzeichnet, dass** es darin besteht, an jeden Zeilenleiter (Y1 bis Y3) einen Vorspannungsimpuls (IP) anzulegen, dessen Vorzeichen der Vorspannung der Fotodioden (Dp) in Sperrrichtung entspricht, und dessen Amplitude (VP1) den Wert der Vorspannung dieser Fotodioden in Sperrrichtung bestimmt, und dass es während der Lesephase (PHL) darin besteht, an jeden Zeilenleiter (Y1 bis Y3) einen Leseimpuls (IL) anzulegen, der eine gegebene Amplitude (VP2) und das gleiche Vorzeichen wie der Vorspannungsimpuls (IP) hat.

5. Steuerverfahren nach dem vorhergehenden Anspruch, **dadurch gekennzeichnet, dass** der Vorspannungsimpuls (IP) die gleiche Amplitude wie diejenige (VP2) des Leseimpulses (IL) aufweist.

6. Steuerverfahren nach Anspruch 4, **dadurch gekennzeichnet, dass** der Vorspannungsimpuls (IP) eine Amplitude (VP1) aufweist, die geringer ist als die Amplitude (VP2) des Leseimpulses (IL).

7. Steuerverfahren nach Anspruch 1, **dadurch gekennzeichnet, dass** das Schaltelement ein Transistor (T) ist.

8. Steuerverfahren nach Anspruch 7, **dadurch gekennzeichnet, dass** jeder Zeile (L1 bis L3) ein Zeilenleiter (Y1 bis Y3) und jeder Spalte (CL1 bis CL3) ein Spaltenleiter (X1 bis X3) entspricht, und dass in den lichtempfindlichen Punkten (P1 bis P9) der Transistor (T) über sein Gate (G) mit einem Zeilenleiter (Y1 bis Y3) und über seine Source (S) mit einem ersten Ende (Kathode oder Anode) der Fotodiode (Dp) und schließlich über seinen Drain (D) mit einem Spaltenleiter (X1 bis X3) verbunden ist, wobei das zweite Ende (Anode oder Kathode) aller Fotodioden (Dp) eine Vorspannung (VpP, VpL) empfängt, die es ermöglicht, diese Fotodioden in Sperrrichtung vorzuspannen.

9. Steuerverfahren nach Anspruch 8, **dadurch gekennzeichnet, dass** der Wert der Vorspannung (VpP, VpL) unterschiedlich ist, je nachdem, ob sie vor einer Bildaufnahmephase (Phi) oder für eine Lesephase (PHL) angelegt wird.

10. Steuerverfahren nach einem der vorhergehenden Ansprüche, **dadurch gekennzeichnet, dass** zumindest die Fotodioden (Dp) aus wasserstoffhaltigem amorphem Silicium (aSiH) hergestellt werden.

11. Steuerverfahren nach einem der vorhergehenden Ansprüche, **dadurch gekennzeichnet, dass** die Matrix (2, 20) mittels Dünnschichttechniken hergestellt wird.

12. Steuerverfahren nach einem der vorhergehenden Ansprüche, **dadurch gekennzeichnet, dass** es darin besteht, die Matrix (2, 20) auf einem lichtdurchlässigen Substrat (7) auszubilden.

13. Steuerverfahren nach dem vorhergehenden Anspruch, **dadurch gekennzeichnet, dass** es darin besteht, eine Lichtquelle (SL) auf einer Seite des Substrats (7) anzuordnen, die der die Matrix (2, 20) tragenden Seite entgegengesetzt ist.

14. Steuerverfahren nach einem der vorhergehenden Ansprüche, **dadurch gekennzeichnet, dass** es darin besteht, einen Szintillatorschirm (9) zwischen einer einfallenden Strahlung und der Matrix (2, 20) anzuordnen.

15. Steuerverfahren nach dem vorhergehenden Anspruch, **dadurch gekennzeichnet, dass** die einfallende Strahlung eine Röntgenstrahlung ist.

16. Lichtempfindliche Vorrichtung, die das Verfahren nach einem der Ansprüche 1 bis 15 anwendet, mit einer Matrix (2, 20) von lichtempfindlichen Punkten (P1 bis P9), die in Zeilen (mindestens eine Zeile) und Spalten (mindestens eine Spalte) angeordnet sind, wobei jeder lichtempfindliche Punkt sich am Kreuzungspunkt einer Zeile (L1 bis L3) und einer Spalte (CL1 bis CL3) befindet und ein Schaltelement (Cd, T) in Reihe mit einer Fotodiode (Dp) enthält, wobei jede Fotodiode (Dp) während einer Bildaufnahmephase (Phi) in Sperrrichtung vorgespannt ist, wobei der Verbindungspunkt zwischen einer Fotodiode (Dp) und einem Schaltelement (Cd, T) einen gemeinsamen Punkt (A) mit Schwimmpotential bildet, wo von der Fotodiode (Dp) erzeugte Ladungen akkumuliert werden, wobei die lichtempfindliche Vorrichtung **dadurch gekennzeichnet ist, dass** sie erste Mittel (SL), die es ermöglichen, die Matrix (2, 20) einem Löschungs-Lichtstrom (FE) einer solchen Stärke und einer solchen Dauer auszusetzen, dass die von ihm erzeugten Ladungen die Spannung der gemeinsamen Punkte verändern, bis sie die Knickspannung der Fotodioden erreicht, um diese in Durchlassrichtung leitend zu machen, und zweite Mittel (3, 13) aufweist, die es nach dem Anlegen des Löschungs-Lichtstroms (FE) und vor der Bildaufnahmephase ermöglichen, die Fotodioden (Dp) in Sperrrichtung vorzuspannen, damit die lichtempfindlichen Punkte die Ladungen während der Bildaufnahmephase erzeugen und akkumulieren können.

17. Lichtempfindliche Vorrichtung nach Anspruch 16, **dadurch gekennzeichnet, dass** die zweiten Mittel (3, 13) es ermöglichen, an jeden lichtempfindlichen Punkt (P1 bis P9) einen Vorspannungsimpuls anzulegen, der das gleiche Vorzeichen hat wie ein Leseimpuls (IL), der an die lichtempfindlichen Punkte (P1 bis P9) während einer Lesephase angelegt wird, die nach der Bildaufnahmephase auftritt.

18. Lichtempfindliche Vorrichtung nach Anspruch 17, **dadurch gekennzeichnet, dass** der Vorspannungsimpuls (IP) eine Amplitude (VP1) hat, die geringer als die Amplitude (VP2) des Leseimpulses (IL) ist.

19. Lichtempfindliche Vorrichtung nach Anspruch 17, **dadurch gekennzeichnet, dass** der Vorspannungsimpuls (IP) eine Amplitude (VP1) gleich derjenigen des Leseimpulses (IL) hat.

20. Lichtempfindliche Vorrichtung nach einem der Ansprüche 16 bis 19, **dadurch gekennzeichnet, dass** das Schaltelement ein Transistor (T) ist.

21. Lichtempfindliche Vorrichtung nach einem der Ansprüche 16 bis 19, **dadurch gekennzeichnet, dass** das Schaltelement eine Diode (Dc) ist.

22. Lichtempfindliche Vorrichtung nach einem der Ansprüche 16 bis 21, **dadurch gekennzeichnet, dass** zumindest die Fotodiode (Dp) aus wasserstoffhaltigem amorphem Silicium (aSiH) hergestellt ist.

23. Lichtempfindliche Vorrichtung nach einem der Ansprüche 16 bis 22, **dadurch gekennzeichnet, dass** einerseits die Matrix (2, 20) auf einem durchsichtigen Substrat (7) hergestellt ist, und dass andererseits die Vorrichtung eine Lichtquelle (SL) aufweist, die auf einer Seite des Substrats entgegengesetzt zu der Seite angeordnet ist, die die Matrix trägt.

24. Lichtempfindliche Vorrichtung nach einem der Ansprüche 16 bis 23, **dadurch gekennzeichnet, dass** sie einen Szintillatorschirm (9) aufweist, der eine Röntgenstrahlung in eine Lichtstrahlung in dem Wellenlängenbereich umwandelt, in dem die Fotodioden (DP) empfindlich sind.

## Claims

1. Drive process for a photosensitive device (1, 1') having a matrix (2, 20) of photosensitive points (P1 to P9), the photosensitive points being arranged in at least one row (L1 to L3) and in at least one column (CL1 to CL3) and each comprising a switch element (Cd, T) in series with a photodiode (Dp) with a common point, the process consisting, on the one hand, in exposing the photosensitive points of the matrix (2, 20) to a so-called working light signal during an imaging phase (Phi), during which charges produced in each photosensitive point (P1 to P9) according to its exposure modify a bias voltage (Va3, Va5) of the photodiode (Dp), and consisting on the other hand in reading the photosensitive points in a reading phase (PHL) which takes place after the imaging phase (Phi), the said process being **characterized in that** it furthermore consists, at least once before the imaging phase (PHi) in firstly exposing the photosensitive points of the matrix (2, 20) to a so-called erasing light flux (FE) having an intensity and a duration which are such that the charges it generates modify the voltage of the common points until this voltage reaches the elbow voltage of the photodiodes so as to cause them to conduct in the forward direction and in secondly reverse-biasing all the photodiodes (Dp) so that the photosensitive points can produce and accumulate the charges during the imaging phase.

2. Drive process according to Claim 1, **characterized in that** the switching element is a so-called switching diode (Dc).

3. Drive process according to the preceding claim, **characterized in that** a row conductor (Y1 to Y3) corresponds to each row (L1 to L3), and **in that** a column conductor (X1 to X3) corresponds to each column (CL1 to CL3), and **in that**, at the photosensitive points (P1 to P9), the switching diode (Dc) and the photodiode (Dp) are connected between a row conductor (Y1 to Y3) and a column conductor (CL1 to CL3) with opposite conduction directions to one another.

4. Drive process according to the preceding claim, **characterized in that** it consists in applying a so-called biasing pulse (IP) to each row conductor (Y1 to Y3), the sign of which corresponds to reverse-biasing the photodiodes (Dp) and the amplitude (VP1) of which determines the value of the reverse-biasing of these photodiodes, and **in that**, during the reading phase (PHL), it consists in applying a reading pulse (IL), having a given amplitude (VP2) and the same sign as the biasing pulse (IP), to each row conductor (Y1 to Y3).

5. Drive process according to the preceding claim, **characterized in that** the biasing pulse (IP) has the same amplitude as that (VP2) of the reading pulse (IL).

6. Drive process according to Claim 4, **characterized in that** the biasing pulse (IP) has an amplitude (VP1) smaller than the amplitude (VP2) of the reading pulse (IL).

7. Drive process according to Claim 1, **characterized in that** the switching element is a transistor (T).

8. Drive process according to Claim 7, **characterized in that** a row conductor (Y1 to Y3) corresponds to each row (L1 to L3), and **in that** a column conductor (X1 to X3) corresponds to each column (CL1 to CL3), and **in that**, at the photosensitive points (P1 to P9), the transistor (T) is connected via its gate (G) to a row conductor (Y1 to Y3) and via its source (S) to a first end (cathode or anode) of the photodiode (Dp) and, lastly, via its drain (D) to a column conductor (X1 to X3), the second end (anode or cathode) of all the photodiodes (Dp) receiving a biasing voltage (VpP, VpL) making it possible to reverse-bias these photodiodes.

9. Drive process according to Claim 8, **characterized in that** the value of the biasing voltage (VpP, VpL) differs depending on whether it is applied before an imaging phase (Phi) or for a reading phase (PHL).

10. Drive process according to one of the preceding claims, **characterized in that** at least the photodiodes (Dp) are produced with hydrogenated amorphous silicon (aSiH).

11. Drive process according to one of the preceding claims, **characterized in that** the matrix (2, 20) is produced by thin-film deposition techniques.

12. Drive process according to one of the preceding claims, **characterized in that** it consists in producing the matrix (2, 20) on an optically transparent substrate (7).

13. Drive process according to the preceding claim, **characterized in that** it consists in arranging a light source (SL) on a face of the substrate (7) opposite the face which carries the matrix (2, 20).

14. Drive process according to one of the preceding claims, **characterized in that** it consists in interposing a scintillator screen (9) between an incident radiation and the matrix (2, 20).

15. Drive process according to the preceding claim, **characterized in that** the incident radiation is X-radiation.

16. Photosensitive device implementing the process according to any one of Claims 1 to 15, having a matrix (2, 20) of photosensitive points (P1 to P9) which are arranged in rows (at least one row) and columns (at least one column), each photosensitive point lying at the intersection of a row (L1 to L3) and a column (CL1 to CL3) and comprising a switch element (Cd, T) in series with a photodiode (Dp), each photodiode (Dp) being reverse-biased during an imaging phase (Phi), the junction between a photodiode (Dp) and a switch element (Cd, T) constituting a common point (A) at floating potential where charges produced by the photodiode (Dp) are accumulated, the photosensitive device being **characterized in that** it has first means (SL) for exposing the matrix (2, 20) to a so-called erasing light flux (FE) having an intensity and a duration that are such that the charges that it generates modify the voltage at the common points until it reaches the onset voltage of the photodiodes so as to make them conduct in the forward direction, and second means (3, 13) making it possible, after application of the erasing light flux (FE) and before the imaging phase, to reverse-bias the photodiodes (Dp) so that the photosensitive points can produce and accumulate the charges during the imaging phase.

17. Photosensitive device according to Claim 16, **characterized in that** the second means (3, 13) make it possible to apply a biasing pulse to each photosensitive point (P1 to P9), having the same sign as a reading pulse (IL) applied to the photosensitive points (P1 to P9) during a reading phase which takes place after the imaging phase.

18. Drive process according to Claim 17, **characterized in that** the biasing pulse (IP) has an amplitude (VP1) smaller than the amplitude (VP2) of the reading pulse (IL).

19. Photosensitive device according to Claim 17, **characterized in that** the biasing pulse (IP) has an amplitude (VP1) equal to that of the reading pulse (IL).

20. Photosensitive device according to one of Claims 16 to 19, **characterized in that** the switch element is a transistor (T).

21. Photosensitive device according to one of Claims 16 to 19, **characterized in that** the switch element is a diode (Dc).

22. Photosensitive device according to one of Claims 16 to 21, **characterized in that** at least the photodiode (Dp) is produced with hydrogenated amorphous silicon (aSiH).

23. Photosensitive device according to one of Claims 16 to 22, **characterized in that**, on the one hand, the matrix (2, 20) is produced on a transparent substrate (7) and, on the other hand, it has a light source (SL) arranged on a face of the substrate opposite the face which carries the matrix.

24. Photosensitive device according to one of Claims 16 to 23, **characterized in that** it has a scintillator screen (9), converting X-radiation to light radiation in the band of wavelengths to which the photodiodes (DP) are sensitive.
